# EUROPEAN PATENT APPLICATION

(11) **EP 4 718 698 A1**
(43) Date of publication of application: **01.04.2026**
(21) Application number: 25205303.8
(22) Date of filing: 29.09.2025
(51) Int. Cl.: H02M 1/32, H02M 7/487

(54) **POWER CONVERSION DEVICE**

(30) Priority: 30.09.2024 CN 202411397876
(71) Applicant: Huawei Digital Power Technologies Co., Ltd., Shenzhen, Guangdong 518043 (CN)
(72) Inventor: QIAN, Bin, Shenzhen, 518043 (CN); LIU, Yunfei, Shenzhen, 518043 (CN); WANG, Chen, Shenzhen, 518043 (CN); BIAN, Shenyiyang, Shenzhen, 518043 (CN)
(74) Representative: Gill Jennings & Every LLP

(57) **Abstract**

This application provides a power conversion device, including a power conversion circuit, a controller, a first capacitor, a first conducting wire, and a second conducting wire. A first inductor is connected in series to the first conducting wire. An alternating current output of a first bridge arm in the power conversion circuit is connected to the first conducting wire. A first end of the first capacitor is connected to a side of the first inductor. A second end of the first capacitor is connected to a direct current end of the power conversion circuit and the second conducting wire. The first conducting wire is a live wire, and the second conducting wire includes at least one of a neutral wire and a ground cable. The controller injects a harmonic signal of a first target frequency into the first bridge arm in the power conversion circuit. When a voltage amplitude of a voltage signal that is of the first target frequency and that is generated between the first conducting wire and the second conducting wire is within a first target range, the controller outputs information about an abnormal connection of the second conducting wire. In this application, the power conversion device can detect whether the neutral wire or the ground cable is abnormally connected, to ensure power supply stability and security, and is also applicable to various power grid standards and power supply scenarios, and has high reliability.

## Description

### TECHNICAL FIELD

This application relates to the technical field of power electronics, and specifically, to a power conversion device.

### BACKGROUND

A power conversion device may be connected to an alternating current load through three live wires and one neutral wire, that is, a three-phase four-wire system is used to supply power to the outside. Alternatively, the power conversion device may be connected to the alternating current load through three live wires, one neutral wire, and one ground cable, that is, a three-phase five-wire system is used to provide electric energy for the outside. The neutral wire of the power conversion device serves as a wire that provides a current loop for the alternating current load, which can ensure that the power conversion device and the alternating current load form a power supply loop. The ground cable of the power conversion device may lead a leakage current generated in a system into the ground, to ensure stability of the system and the alternating current load.

When a connection between the neutral wire of the power conversion device and the alternating current load is abnormal, for example, when the neutral wire is floating, a working loop between the power conversion device and the alternating current load is disconnected, and the alternating current load cannot be normally powered on. As a result, the alternating current load works abnormally or is even damaged, and the alternating current load may be interfered. In addition, when a connection between the ground cable of the power conversion device and the alternating current load is abnormal, the ground cable of the power conversion device is disconnected from the alternating current load, and a leakage current generated by the power conversion device adversely affects the alternating current load, which affects power supply stability. Therefore, how to prevent an abnormal connection from occurring on the neutral wire or the ground cable of the power conversion device when the power conversion device is connected is an urgent technical problem that needs to be resolved by a person skilled in the art.

### SUMMARY

This application provides a power conversion device that can detect whether a neutral wire or a ground cable is abnormally connected, to ensure power supply stability and security. The power conversion device is also applicable to various power grid standards and power supply scenarios, has a simple structure, is easy to implement, and has high reliability.

According to a first aspect, this application provides a power conversion device, including a power conversion circuit, a controller, at least one first capacitor, at least one first conducting wire, and at least one second conducting wire. A first inductor is connected in series to any one first conducting wire. The power conversion circuit includes at least one first bridge arm. An alternating current output of each first bridge arm is connected to one corresponding first conducting wire. A first end of a first capacitor corresponding to each first bridge arm is connected to a side that is of the first inductor on the first conducting wire and that is away from the first bridge arm. A second end of the first capacitor corresponding to each first bridge arm is connected to a direct current end of the power conversion circuit and one corresponding second conducting wire. The first conducting wire is a live wire, and the at least one second conducting wire includes at least one of a neutral wire and a ground cable. The controller is configured to: after injecting a harmonic signal of a first target frequency into the at least one first bridge arm in the power conversion circuit, when a voltage amplitude of a voltage signal that is of the first target frequency and that is generated between the first conducting wire and the second conducting wire is within a first target range, output information about an abnormal connection of the second conducting wire. In this application, the power conversion device injects, by using the controller, the harmonic signal of the first target frequency into the at least one first bridge arm disposed in the power conversion circuit, so that the alternating current output of the first bridge arm can transmit, to the corresponding first conducting wire, the voltage signal carrying the first target frequency. Further, when the second conducting wire is abnormally connected, the voltage signal that is of the first target frequency and that is transmitted on the first conducting wire may flow to the direct current end of the power conversion device through the first capacitor, so that the voltage signal of the first target frequency is generated between the first conducting wire and the second conducting wire, and the voltage amplitude of the voltage signal is within the first target range. Therefore, the power conversion device detects, by using the controller, the voltage amplitude of the voltage signal that is of the first target frequency and that is generated between the first conducting wire and the second conducting wire in this case, which may determine whether the second conducting wire is abnormally connected. It may be understood that when the power conversion device includes the ground cable, the second conducting wire may be a to-be-detected ground cable. When the power conversion device includes the neutral wire and the ground cable, the second conducting wire may be the to-be-detected neutral wire and the to-be-detected ground cable. It can be learned that the power conversion device provided in embodiments of this application may detect whether the neutral wire or the ground cable is abnormally connected, or may detect whether both the neutral wire and the ground cable are abnormally connected, to ensure power supply stability and security. The power conversion device is also applicable to various power grid standards and power supply scenarios, has a simple structure, and is easy to implement.

In a possible implementation, the first target range includes being greater than a first voltage threshold. The first voltage threshold is positively correlated with a voltage amplitude of the harmonic signal of the first target frequency, and the first voltage threshold is negatively correlated with a capacitance value of the first capacitor. The controller is further configured to: when the voltage amplitude of the voltage signal that is of the first target frequency and that is generated between the first conducting wire and the second conducting wire is greater than the first voltage threshold, output the information about the abnormal connection of the second conducting wire. In this application, the controller may obtain the first voltage threshold based on the voltage amplitude of the harmonic signal of the first target frequency and the capacitance value of the first capacitor, to obtain the first target range. This is highly flexible.

In a possible implementation, the first target range includes a target range greater than a second voltage threshold and less than a third voltage threshold. The second voltage threshold and the third voltage threshold are positively correlated with a voltage amplitude of the harmonic signal of the first target frequency, and the second voltage threshold and the third voltage threshold are negatively correlated with a capacitance value of the first capacitor. The controller is further configured to: when the voltage amplitude of the voltage signal that is of the first target frequency and that is generated between the first conducting wire and the second conducting wire is greater than the second voltage threshold and is less than the third voltage threshold, output the information about the abnormal connection of the second conducting wire. In this application, the controller may obtain the second voltage threshold and the third voltage threshold based on the voltage amplitude of the harmonic signal of the first target frequency and the capacitance value of the first capacitor, to determine a magnitude of the target range. This is highly flexible.

In a possible implementation, the voltage amplitude of the harmonic signal of the first target frequency is negatively correlated with the capacitance value of the first capacitor. In this application, the power conversion device may adjust a magnitude of the voltage amplitude of the harmonic signal of the first target frequency based on a magnitude of the capacitance value of the first capacitor, or set the corresponding first capacitor based on the magnitude of the voltage amplitude of the harmonic signal of the first target frequency, which can meet requirements of different application scenarios. This is highly flexible.

In a possible implementation, the power conversion device includes two second conducting wires. One second conducting wire is the neutral wire, and the other second conducting wire is the ground cable. In this application, when the power conversion device includes the neutral wire and the ground cable, the power conversion device can detect whether either the neutral wire or the ground cable is abnormally connected by injecting the harmonic signal of the first target frequency into the at least one first bridge arm by using the controller, and therefore has high detection efficiency and is easy to implement.

In a possible implementation, the power conversion device includes a plurality of first capacitors and a plurality of first conducting wires, and the power conversion circuit includes a plurality of first bridge arms. The controller is configured to: inject the harmonic signal of the first target frequency into a first target bridge arm in the power conversion circuit, and when a voltage amplitude of a voltage signal that is of the first target frequency and that is generated between a first conducting wire and a second conducting wire that correspond to the first target bridge arm is within the first target range, output the information about the abnormal connection of the second conducting wire. The first target bridge arm is any one of the plurality of first bridge arms in the power conversion circuit. In this application, the power conversion device can detect whether the neutral wire or the ground cable is abnormally connected by injecting the harmonic signal of the first target frequency into one first bridge arm by using the controller. Steps are simple and easy to implement.

In a possible implementation, the power conversion device includes a plurality of first capacitors and a plurality of first conducting wires, and the power conversion circuit includes a plurality of first bridge arms. The controller is configured to: inject the harmonic signal of the first target frequency into the plurality of first bridge arm in the power conversion circuit, and when a voltage amplitude of a voltage signal that is of the first target frequency and that is generated between a first conducting wire and a second conducting wire that correspond to the first target bridge arm is within the first target range, output the information about the abnormal connection of the second conducting wire. The first target bridge arm is any one of the plurality of first bridge arms in the power conversion circuit. In this application, the power conversion device can detect whether the neutral wire or the ground cable is abnormally connected by symmetrically injecting the harmonic signal of the first target frequency into the plurality of first bridge arms by using the controller. In addition, the voltage signal of the first target frequency is symmetrically injected between the first conducting wires, to ensure that the first conducting wires stably transmit signals.

In a possible implementation, the at least one second conducting wire includes the neutral wire, the power conversion device further includes a second capacitor, and the second end of the at least one first capacitor is connected to the neutral wire through the second capacitor. In this application, the second end of the first capacitor is connected to the neutral wire through the second capacitor, which can improve isolation and filtering effect between the first conducting wire and the second conducting wire.

In a possible implementation, the alternating current output of each first bridge arm in the power conversion circuit is configured to connect to an alternating current load through the corresponding first conducting wire, and the controller is configured to: when the harmonic signal of the first target frequency is injected into the at least one first bridge arm in the power conversion circuit, transmit a fundamental wave signal to the alternating current load through the first conducting wire that corresponds to the at least one first bridge arm. In this application, when injecting the harmonic signal of the first target frequency into the first bridge arm, the controller may control an action of the first bridge arm, so that the first bridge arm simultaneously transmits the fundamental wave signal to a power grid through the first conducting wire. That is, an alternating current electrical signal output by the first bridge arm may be obtained through superposition of the fundamental wave signal and the voltage signal of the first target frequency. In this way, when the first conducting wire is connected to the power grid, power backflow that causes damage to the power conversion circuit does not occur.

In a possible implementation, one second conducting wire is included, and the second conducting wire is the neutral wire. The power conversion device further includes the ground cable and a third capacitor, and a second inductor is connected in series to the neutral wire. An alternating current output of a second bridge arm in the power conversion circuit is connected to the neutral wire. A first end of the third capacitor is connected to a side that is of the second inductor on the neutral wire and that is away from the second bridge arm. A second end of the third capacitor is connected to the ground cable and the direct current end of the power conversion circuit. The controller is further configured to: inject a harmonic signal of a second target frequency into the second bridge arm in the power conversion circuit, and when a voltage amplitude of a voltage signal that is of the second target frequency and that is generated between the neutral wire and the ground cable is within a second target range, output information about an abnormal connection of the ground cable. In this application, the power conversion device may inject the harmonic signal of the second target frequency into the second bridge arm, so that the alternating current output of the second bridge arm can transmit, to the corresponding neutral wire, the voltage signal carrying the second target frequency. Further, when the ground cable is abnormally connected, the voltage signal that is of the second target frequency and that is transmitted on the neutral wire may flow to the direct current end of the power conversion device through the third capacitor, so that the voltage signal of the second target frequency is generated between the neutral wire and the ground cable, and the voltage amplitude of the voltage signal is within the second target range. Therefore, the power conversion device may detect, by using the controller, the voltage amplitude of the voltage signal that is of the second target frequency and that is generated between the neutral wire and the ground cable in this case, to determine whether the ground cable is abnormally connected, which ensures power supply stability and security. In addition, a structure is simple and easy to implement.

In a possible implementation, the power conversion device further includes a positive busbar capacitor and a negative busbar capacitor that are connected in series to a neutral point. The positive busbar capacitor is connected to a positive direct current busbar, and the negative busbar capacitor is connected to a negative direct current busbar. The power conversion circuit is connected in parallel between the positive direct current busbar and the negative direct current busbar and is connected to the neutral point. The direct current end of the power conversion circuit is any one of the neutral point, the positive direct current busbar, or the negative direct current busbar. In this application, the power conversion device may use any one of the neutral point, the positive direct current busbar, or the negative direct current busbar as the direct current end of the power conversion circuit. In addition, when the second conducting wire is abnormally connected, the voltage signal of the first target frequency can flow to the direct current end of the power conversion circuit. The structure is simple and easy to implement.

In a possible implementation, the power conversion device further includes at least one voltage divider component. The second end of the first capacitor is connected to the direct current end of the power conversion circuit and is connected to the second conducting wire through one voltage divider component. Alternatively, the second end of the first capacitor is connected to the second conducting wire and is connected to the direct current end of the power conversion circuit through one voltage divider component. Alternatively, the second end of the first capacitor is connected to the direct current end of the power conversion circuit through one voltage divider component, and is connected to the second conducting wire through another voltage divider component. The voltage divider component is a capacitor or a resistor. In this application, the voltage divider component is disposed between the second conducting wire and the direct current end of the power conversion circuit, and may isolate the second conducting wire from the direct current end of the power conversion circuit.

In a possible implementation, the power conversion device further includes at least one first switch unit, and each first switch unit is disposed between a corresponding first inductor and the alternating current load. That the controller is configured to inject the harmonic signal of the first target frequency into the at least one first bridge arm in the power conversion circuit includes: the controller is configured to: after controlling the at least one first switch unit to be turned on, inject the harmonic signal of the first target frequency into at least one first bridge arm that is in the power conversion circuit and that corresponds to the at least one first switch unit. In this application, the power conversion circuit controls the first switch unit to be turned on, so that the voltage signal of the first target frequency that is output by the power conversion circuit can be transmitted to the first capacitor or transmitted to the alternating current load through the turned-on first switch unit. The structure is simple and easy to control.

In a possible implementation,
the power conversion device further includes a second switch unit, the second switch unit is disposed between the direct current end of the power conversion circuit and the second end of the first capacitor, and the second end of the first capacitor is further connected to the second conducting wire. That the controller is configured to inject the harmonic signal of the first target frequency into the at least one first bridge arm in the power conversion circuit includes: the controller is configured to: after controlling the second switch unit and the at least one first switch unit to be turned on, inject the harmonic signal of the first target frequency into the at least one first bridge arm that is in the power conversion circuit and that corresponds to the at least one first switch unit. In this application, the power conversion circuit controls the first switch unit and the second switch unit to be turned on, so that when the voltage signal of the first target frequency output by the power conversion circuit is transmitted to the first capacitor through the turned-on first switch unit and the second switch unit, the voltage signal of the first target frequency can be generated between the first conducting wire and the second conducting wire. The structure is simple and easy to control.

### BRIEF DESCRIPTION OF DRAWINGS

FIG. 1 is a diagram of an application scenario of a power supply system according to this application;
FIG. 2 is a diagram of another application scenario of a power supply system according to an embodiment of this application;
FIG. 3 is a diagram of a framework of a power conversion device according to an embodiment of this application;
FIG. 4 is a diagram of another framework of a power conversion device according to an embodiment of this application;
FIG. 5 is a diagram of still another framework of a power conversion device according to an embodiment of this application;
FIG. 6 is a diagram of still another framework of a power conversion device according to an embodiment of this application;
FIG. 7 is a diagram of still another framework of a power conversion device according to an embodiment of this application;
FIG. 8 is a diagram of still another framework of a power conversion device according to an embodiment of this application;
FIG. 9 is a diagram of still another framework of a power conversion device according to an embodiment of this application;
FIG. 10 is a diagram of still another framework of a power conversion device according to an embodiment of this application;
FIG. 11 is a diagram of still another framework of a power conversion device according to an embodiment of this application;
FIG. 12 is a diagram of still another framework of a power conversion device according to an embodiment of this application; and
FIG. 13 is a diagram of still another framework of a power conversion device according to an embodiment of this application.

### DESCRIPTION OF EMBODIMENTS

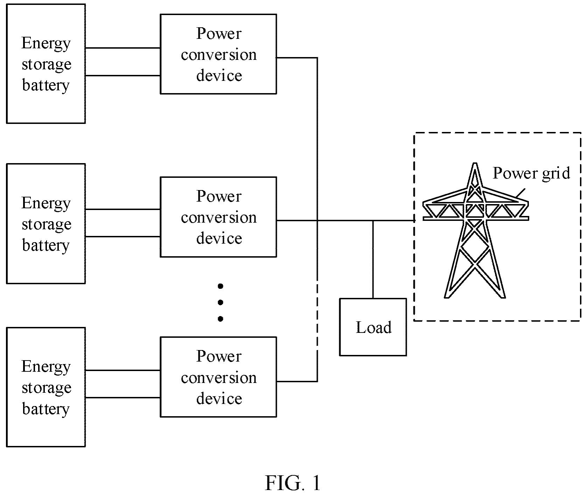

FIG. 1 is a diagram of an application scenario of a power supply system according to this application. The power supply system provided in this application may include a direct current power supply and at least one power conversion device. The direct current power supply may be specifically an energy storage battery. For example, if the power supply system includes a plurality of power conversion devices. A direct current end of each power conversion device may be connected to the energy storage battery. Alternating current outputs of the plurality of power conversion devices may be connected in parallel, and then are connected to an alternating current load. The power conversion device may perform inversion conversion on a direct current provided by the energy storage battery, and output an alternating current obtained through the inversion conversion to the alternating current load to supply power. Alternatively, the power conversion device may perform rectification conversion on an alternating current provided by the alternating current load, and provide a direct current obtained through the rectification conversion to the direct current power supply for charging. The alternating current load may be understood as a power grid. The power grid is an alternating current network including substations and power transmission and distribution lines of various voltages, and may provide a power frequency alternating current for a load. The power grid may be a single-phase alternating current power grid, or may be a three-phase alternating current power grid. This is not specifically limited in embodiments of this application. Alternatively, the alternating current load may be understood as the load, for example, may be a power-consuming device like a battery, a communication base station, or a home device. For ease of description, the following uses an example in which the alternating current load is the power grid for description.

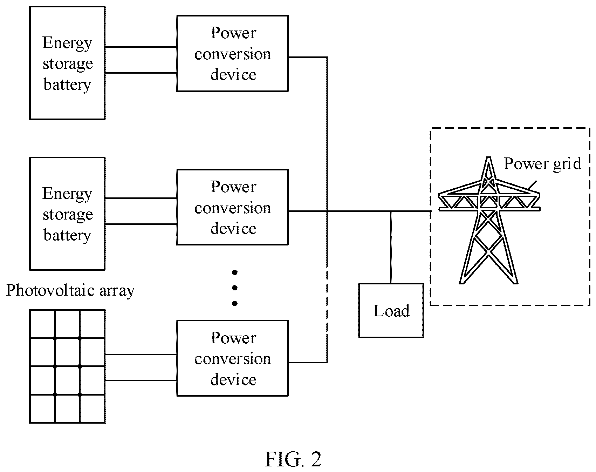

In some feasible implementations, the direct current power supply in the power supply system may be a photovoltaic array. In this case, for a diagram of a structure of the power supply system, refer to FIG. 2. FIG. 2 is a diagram of another application scenario of the power supply system according to an embodiment of this application. In the plurality of power conversion devices in the power supply system shown in FIG. 2, direct current ends of some power conversion devices may be connected to a corresponding photovoltaic array. The photovoltaic array includes one or more photovoltaic strings connected in parallel, and one photovoltaic string may be obtained by connecting one or more photovoltaic modules in series. The photovoltaic array may convert light energy into electric energy, and transmit, in a direct current manner, the generated electric energy to the direct current end of the power conversion device, or transmit the generated electric energy to the energy storage battery for storage. It may be understood that the power conversion device connected to the photovoltaic array in the power supply system may be an inverter, and the power conversion device connected to the energy storage battery in the power supply system may be a converter.

In an application scenario of the power supply system shown in FIG. 1 or FIG. 2, the power conversion device may be connected to the alternating current load through three live wires and one neutral wire. That is, a three-phase four-wire system is used to supply power to the power grid. Alternatively, the power conversion device may be connected to the power grid through three live wires, one neutral wire, and one ground cable, that is, a three-phase five-wire system is used to provide electric energy for the power grid. The neutral wire of the power conversion device serves as a wire that provides a current loop for the power grid, which can ensure that the power conversion device and the power grid form a power supply loop. The ground cable of the power conversion device may lead a leakage current generated in a system into the ground, to ensure stability of the system and the power grid. When a connection between the neutral wire of the power conversion device and the alternating current load is abnormal, for example, when the neutral wire is floating, a working loop between the power conversion device and the power grid is disconnected, and a load of the power grid cannot be normally powered on. As a result, the load works abnormally or is even damaged, and the power grid may be interfered. In addition, when a connection between the ground cable of the power conversion device and the power grid is abnormal, the ground cable of the power conversion device is disconnected from the power grid, and a leakage current generated by the power conversion device adversely affects the power grid, which affects power supply stability.

In view of this, an embodiment of this application provides a power conversion device that detects whether the neutral wire or the ground cable is abnormally connected when the power conversion device is connected to the power grid, to prevent an abnormal connection from occurring on the neutral wire or the ground cable of the power conversion device, and ensure power supply stability and security.

The power conversion device provided in this embodiment of this application includes a power conversion circuit and at least one first conducting wire, and the first conducting wire may be specifically a live wire. A first bridge arm corresponding to each first conducting wire is disposed in the power conversion circuit, and an alternating current output of each first bridge arm is connected to one corresponding first conducting wire. The power conversion device may control, by using the controller, an action of each first bridge arm, to adjust an alternating current electrical signal output by the alternating current output of the first bridge arm. The power conversion device further includes at least one second conducting wire, and the second conducting wire is connected to a direct current end of the power conversion circuit. When the power conversion device includes the neutral wire, the second conducting wire may be a to-be-detected neutral wire. When the power conversion device includes the ground cable, the second conducting wire may be a to-be-detected ground cable. When the power conversion device includes the neutral wire and the ground cable, the power conversion device includes two second conducting wires. One second conducting wire is the to-be-detected neutral wire, and the other second conducting wire is the to-be-detected ground cable. At least one first capacitor is further disposed in the power conversion device, and each first capacitor is disposed between one corresponding first conducting wire and the direct current end of the power conversion circuit. To detect whether the second conducting wire is abnormally connected, the power conversion device may inject, by using the controller, a harmonic signal of a first target frequency into at least one first bridge arm in the power conversion circuit, and detect a voltage amplitude of a voltage signal that is of the first target frequency and that is generated between the first conducting wire and the second conducting wire. When the voltage amplitude of the voltage signal that is of the first target frequency and that is generated between the first conducting wire and the second conducting wire is within a first target range, it indicates that the second conducting wire is abnormally connected, and the controller may output information about an abnormal connection of the second conducting wire. On the contrary, when the voltage amplitude of the voltage signal that is of the first target frequency and that is generated between the first conducting wire and the second conducting wire is beyond the first target range, it may indicate that the connection of the second conducting wire is normal, and the controller may output information indicating that the second conducting wire is normally connected, or does not output information, which indicates that no abnormal connection exists. It can be learned that the power conversion device provided in embodiments of this application may detect whether the neutral wire or the ground cable is abnormally connected, or may detect whether both the neutral wire and the ground cable are abnormally connected. The power conversion device is applicable to various power grid standards and power supply scenarios, ensures power supply stability and security, has a simple structure, and is easy to implement.

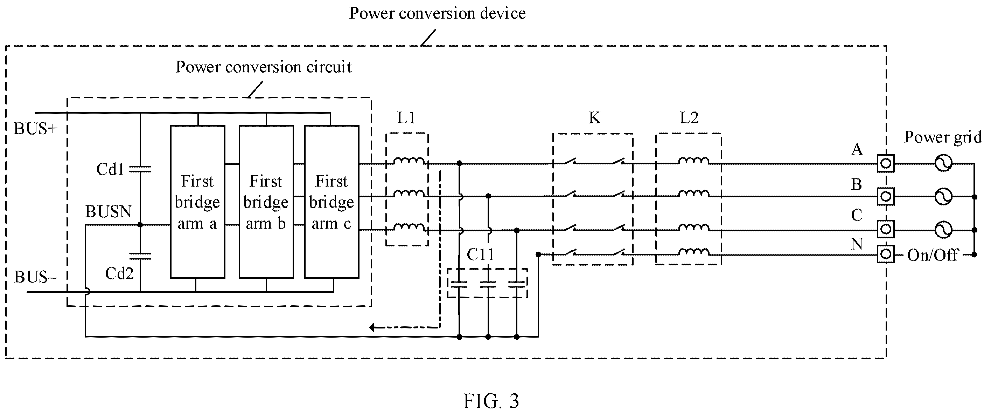

In some feasible implementations, when the power conversion device is connected to a power grid by using a three-phase four-wire system, the power conversion device is connected to the power grid through three live wires and one neutral wire. In this case, the power conversion device includes three first conducting wires, namely, the three live wires, and one second conducting wire, namely, the neutral wire. The power conversion device may detect whether the neutral wire is abnormally connected, to ensure power supply stability and security. Specifically, refer to FIG. 3. FIG. 3 is a diagram of a framework of the power conversion device according to an embodiment of this application. The power conversion device shown in FIG. 3 includes a power conversion circuit. The power conversion circuit includes three first bridge arms: a first bridge arm a, a first bridge arm b, and a first bridge arm c. An alternating current output of the first bridge arm a may be connected to a live wire A, an alternating current output of the first bridge arm b may be connected to a live wire B, and an alternating current output of the first bridge arm c may be connected to a live wire C. Each first bridge arm may be a three-level or multilevel bridge arm. In addition, each first bridge arm is connected between a positive busbar BUS+ and a negative busbar BUS-, and each first bridge arm is connected in parallel to two ends of a direct current side capacitor Cd1 and a direct current side capacitor Cd2 that are connected in series. In some application scenarios, more than two direct current side capacitors may be disposed in the power conversion circuit. The direct current side capacitor Cd1 and the direct current side capacitor Cd2 shown in FIG. 3 are merely examples, and this does not constitute a limitation on embodiments of this application. A direct current end of the power conversion circuit may be connected to a neutral wire N, and the direct current end may be the positive busbar BUS+, the negative busbar BUS-, or a neutral point BUSN that is connected to the direct current side capacitor Cd1 and the direct current side capacitor Cd2. In addition, in some application scenarios, when the power conversion circuit includes more than two direct current side capacitors, a connection point of any two direct current side capacitors may be used as the neutral point BUSN.

For ease of description, in FIG. 3, an example in which the neutral point BUSN that is connected to the direct current side capacitor Cd1 and the direct current side capacitor Cd2 is used as the direct current end of the power conversion circuit is used for description. In a working process of the power conversion device, a controller may control an action of each first bridge arm to enable the alternating current output to output a fundamental wave signal, and inject the fundamental wave signal into the power grid through a connected live wire. The controller may control fundamental wave signals output by the three first bridge arms to have different phases, that is, the corresponding live wires of the three first bridge arms may inject fundamental wave signals of different phases into the power grid, to implement multi-phase power transmission to the power grid. It may be understood that multi-phase power transmission may achieve higher power transmission efficiency, and reduce transmission line settings.

In some feasible implementations, the power conversion device may include a first inductor group L1, a first capacitor group Cl1, a switch unit K, and a first inductor group L2. The first inductor group L1 includes three first inductors. Each first inductor is connected in series to one corresponding live wire. The first capacitor group C11 includes three first capacitors. A first end of each first capacitor is connected to one corresponding live wire, and a second end is connected to the direct current end of the power conversion circuit. It should be noted that a connection, between a component and a port, between components, or between ports, that is mentioned in embodiments of this application may be a direct connection, or may be an indirect connection through another electronic element. This is not limited in embodiments of this application. The switch unit K includes three first switch units and one second switch unit. Each first switch unit is connected in series to one corresponding live wire, and the second switch unit is disposed between the neutral wire and the direct current end of the power conversion circuit. The first inductor group L2 includes three first inductors, each of which is connected in series to one corresponding live wire, and further includes a second inductor connected in series to the neutral wire. For a specific connection relationship of the foregoing electronic components, refer to FIG. 3. Details are not described herein in this embodiment of this application. It should be noted that the first inductor group L1 and the first capacitor group C11 may form an LC filter circuit, to perform filtering on an alternating current electrical signal transmitted on each conducting wire, which improves quality of a power supply. Similarly, the first inductor group L2 may perform filtering, voltage stabilizing, electromagnetic interference elimination, or the like on the output alternating current electrical signal.

In some feasible implementations, to detect whether the neutral wire N shown in FIG. 3 is abnormally connected, the power conversion device may inject a harmonic signal of a first target frequency into one of the first bridge arms by using the controller. In addition, when detecting that a voltage amplitude of a voltage signal that is of the first target frequency and that is generated between the live wire and the neutral wire N is within a first target range, the power conversion device may output information about an abnormal connection of the neutral wire N. For example, an example in which the controller injects the harmonic signal of the first target frequency into the first bridge arm a is used for description. As shown in FIG. 3, the controller may control the second switch unit on the neutral wire N and the first switch unit on the live wire A to be turned on, and inject the harmonic signal of the first target frequency into the first bridge arm a by using the neutral point BUSN as a reference ground, to control the first bridge arm a to act and output an alternating current electrical signal to the live wire A. In addition, the alternating current electrical signal carries the voltage signal of the first target frequency. The first target frequency may be determined based on a power frequency of a power grid to which the power conversion device is connected, and the first target frequency may be greater than the power frequency of the power grid. For example, it is assumed that the power frequency of the power grid is 50 Hz. The first target frequency may be specifically three times the power frequency, that is, the first target frequency may be 150 Hz. In addition, a voltage amplitude of the harmonic signal of the first target frequency is negatively correlated with a capacitance value of a first capacitor corresponding to the live wire A. That is, a larger capacitance value of the first capacitor corresponding to the live wire A indicates a smaller voltage amplitude of the harmonic signal that is of the first target frequency and that is injected by the controller to the first bridge arm a. Otherwise, a larger voltage amplitude is indicated. Specifically, a magnitude of the first target frequency and a magnitude of the voltage amplitude of the harmonic signal injected into the first bridge arm a may be adjusted based on a requirement of an actual application scenario. This is not limited in embodiments of this application.

In addition, it should be noted that when injecting the harmonic signal of the first target frequency into the first bridge arm a, the controller may control an action of the first bridge arm a, so that the first bridge arm a simultaneously transmits the fundamental wave signal to the power grid through the live wire A. That is, the alternating current electrical signal output by the first bridge arm a may be obtained through superposition of the fundamental wave signal and the voltage signal of the first target frequency. In this way, when the live wire A is connected to the power grid, power backflow that causes damage to the power conversion circuit does not occur.

Further, when the alternating current electrical signal injected by the first bridge arm a to the live wire A carries the voltage signal of the first target frequency, if the neutral wire N is floating, that is, the neutral wire N is not connected to the power grid, the live wire A and the neutral wire N cannot form a current loop. In this case, as shown in FIG. 3, the alternating current electrical signal output by the first bridge arm a flows to the neutral point BUSN through a first capacitor that is in the first capacitor group C11 and that corresponds to the live wire A. In this way, the first capacitor is charged. Then, a voltage signal of the first target frequency is generated between the live wire A and the neutral wire N, and a voltage amplitude of the voltage signal of the first target frequency is within the first target range. On the contrary, if the neutral wire N is normally connected to the power grid, the alternating current electrical signal output by the first bridge arm a may be injected into the power grid through the live wire A. In this case, the live wire A and the neutral wire N are clamped by a voltage of the power grid, and the first capacitor in the first capacitor group C11 is not charged. In this case, the voltage signal of the first target frequency is not generated between the live wire A and the neutral wire N, or the voltage amplitude of the voltage signal that is of the first target frequency and that is generated between the live wire A and the neutral wire N is not within the first target range. It can be learned that after injecting the harmonic signal of the first target frequency into the first bridge arm a, the controller may detect whether the voltage amplitude of the voltage signal that is of the first target frequency and that is generated between the live wire A and the neutral wire N is within the first target range, to further determine whether the neutral wire is abnormally connected.

The first target range may be specifically greater than a first voltage threshold. That is, when detecting that the voltage amplitude of the voltage signal that is of the first target frequency and that is generated between the live wire A and the neutral wire N is greater than the first voltage threshold, the controller may output the information about the abnormal connection of the neutral wire. It should be noted that when the neutral wire N is floating, a magnitude of the voltage amplitude of the voltage signal that is of the first target frequency and that is generated between the live wire A and the neutral wire N is related to an equivalent impedance of the first capacitor, and the equivalent impedance of the first capacitor is positively correlated with the voltage amplitude of the harmonic signal injected by the controller to the first bridge arm a, and is negatively correlated with a capacitance value of the first capacitor. Specifically, when the capacitance value of the first capacitor is smaller, the equivalent impedance of the first capacitor is larger, an amplitude of a charging voltage that can be generated by the first capacitor is also larger, and a value of the first voltage threshold may also be larger. Therefore, the controller may determine the first voltage threshold based on the voltage amplitude of the harmonic signal injected into the first bridge arm a and the capacitance value of the first capacitor.

Alternatively, the first target range may be specifically a target range greater than a second voltage threshold and less than a third voltage threshold. That is, when detecting that the voltage amplitude of the voltage signal that is of the first target frequency and that is generated between the live wire A and the neutral wire N is within the target range, the controller may output the information about the abnormal connection of the neutral wire. It can be learned from the foregoing content that when the neutral wire N is floating, the magnitude of the voltage amplitude of the voltage signal that is of the first target frequency and that is generated between the live wire A and the neutral wire N is positively correlated with the voltage amplitude of the harmonic signal injected by the controller to the first bridge arm a, and is negatively correlated with the capacitance value of the first capacitor. Therefore, the controller may determine a target voltage threshold based on the voltage amplitude of the harmonic signal injected into the first bridge arm a and the capacitance value of the first capacitor, and determine a detection fluctuation range based on the target voltage threshold, to obtain the second voltage threshold and the third voltage threshold, and determine a corresponding target range. For example, when it is assumed that the controller injects the harmonic signal of the first target frequency into the first bridge arm a, and the neutral wire N is floating, a harmonic divided voltage generated after the first capacitor is charged is equal to 5 V. In this case, the controller may determine that the target voltage threshold is 5 V. In addition, if it is assumed that the detection fluctuation range of the controller is 10%, the second voltage threshold may be equal to a product of 5 V and 0.9, and the third voltage threshold may be equal to a product of 5 V and 1.1. The foregoing is merely an example, and this does not constitute a limitation on embodiments of this application.

In some feasible implementations, when the capacitance value of the first capacitor is extremely small, the equivalent impedance of the first capacitor tends to be infinite. In this case, the first capacitor connected in series between the live wire and the neutral wire N may be considered as an open circuit. In this case, if the neutral wire N is floating, the voltage signal that is of the first target frequency and that is transmitted on the live wire A is rarely transmitted to the direct current end of the power conversion circuit through the first capacitor. However, the controller can still detect that the voltage amplitude of the voltage signal that is of the first target frequency and that is generated between the live wire A and the neutral wire N is within the first target range. Therefore, when the first capacitor connected between the live wire A and the neutral wire N is the open circuit, the controller provided in this embodiment of this application can still detect whether the neutral wire is connected, which is highly reliable.

In some feasible implementations, to determine whether the voltage amplitude of the voltage signal that is of the first target frequency and that is generated between the live wire A and the neutral wire N is within the first target range, the controller may first obtain, through sampling, a voltage signal that is on the live wire A and the neutral wire N and whose frequency is equal to the first target frequency, that is, filter out a voltage signal of another frequency. If the controller does not obtain, through sampling from the live wire A and the neutral wire N, the voltage signal whose frequency is equal to the first target frequency, it indicates that the neutral wire N is normally connected to the power grid. When obtaining, through sampling from the live wire A and the neutral wire N, the voltage signal whose frequency is equal to the first target frequency, the controller may further detect whether a voltage amplitude of the voltage signal of the first target frequency is within the first target range. If the voltage amplitude of the voltage signal of the first target frequency is within the first target range, it indicates that the neutral wire N is abnormally connected; and otherwise, it indicates that the neutral wire N is normally connected to the power grid. In some feasible implementations, in addition to injecting the harmonic signal of the first target frequency into the first bridge arm a, the controller may further inject the harmonic signal of the first target frequency into the first bridge arm b or the first bridge arm c, to detect whether the neutral wire N is abnormally connected. It may be understood that the controller may inject the harmonic signal of the first target frequency into the first bridge arm b or the first bridge arm c, and also control both a first switch unit on a live wire B or a live wire C and the second switch unit on the neutral wire N to be turned on, to detect whether the neutral wire N is abnormally connected. For a specific implementation principle, refer to the specific implementation in the foregoing content, in which the controller injects the harmonic signal of the first target frequency into the first bridge arm a to detect whether the neutral wire N is abnormally connected. Details are not described in this embodiment of this application.

In some feasible implementations, in addition to injecting the harmonic signal of the first target frequency into the first bridge arm a, the first bridge arm b, or the first bridge arm c, the controller may also simultaneously and symmetrically inject the harmonic signal of the first target frequency into the first bridge arm a, the first bridge arm b, and the first bridge arm c, and also control the first switch units on the live wire A, the live wire B, and the live wire C and the second switch unit on the neutral wire N to be turned on, to detect whether the neutral wire N is connected abnormally. It may be understood that in this case, if the neutral wire N is floating, voltage signals that are of the first target frequency and that are on the three live wires shown in FIG. 3 each flow to the neutral point BUSN through a corresponding first capacitor. In this way, the voltage signal of the first target frequency is generated between each live wire and the neutral wire N, and the voltage amplitude is within the first target range. Therefore, when simultaneously and symmetrically injecting the harmonic signal of the first target frequency into the first bridge arm a, the first bridge arm b, and the first bridge arm c at the same time, the controller may detect whether a voltage amplitude of a voltage signal that is of the first target frequency and that is generated between any live wire and the neutral wire N is within the first target range, to determine whether the neutral wire N is abnormally connected. It may be understood that for an implementation in which the controller simultaneously injects the harmonic signal of the first target frequency into the first bridge arm a, the first bridge arm b, and the first bridge arm c, to detect whether the neutral wire N is abnormally connected, refer to the specific implementation in the foregoing content, in which the controller injects the harmonic signal of the first target frequency into the first bridge arm a to detect whether the neutral wire N is abnormally connected. Details are not described in this embodiment of this application.

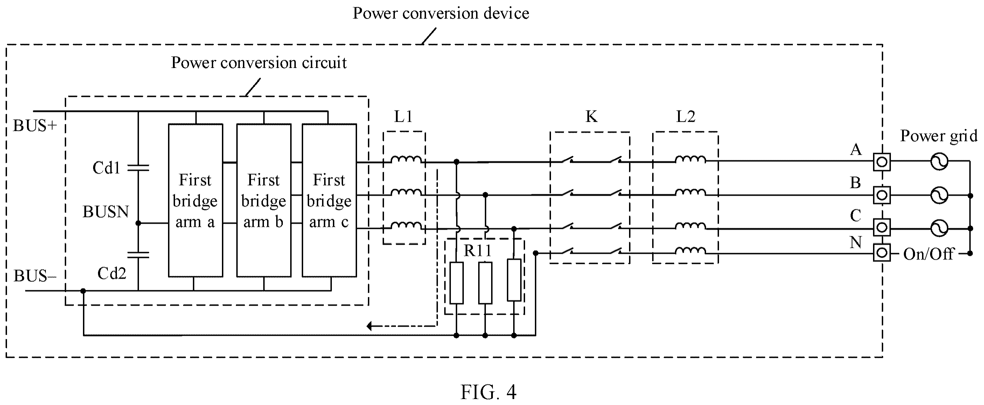

In some feasible implementations, a specific structure of the power conversion device may also be as shown in FIG. 4. FIG. 4 is a diagram of another framework of the power conversion device according to an embodiment of this application. In the power conversion device shown in FIG. 4, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, and the first inductor group L2 in the power conversion circuit, refer to the foregoing content and FIG. 4. Details are not described herein in this embodiment of this application. In addition, the power conversion device includes a resistor unit R11. The resistor unit R11 includes three first resistors. A first end of each first resistor is connected to one corresponding live wire, and a second end is connected to the neutral wire N in the power conversion circuit and the direct current end of the power conversion circuit. It can be learned that a difference between the power conversion device shown in FIG. 3 and the power conversion device shown in FIG. 4 lies in that the first capacitor group C11 shown in FIG. 3 may be replaced with the resistor unit R11 shown in FIG. 4.

It should be noted that same as the first capacitor in the first capacitor group C11, when the neutral wire N is floating, each first resistor in the resistor unit R11 may transmit, to the direct current end of the power conversion circuit, a voltage signal that is of the first target frequency and that is transmitted on the live wire, to generate a voltage signal of the first target frequency between the live wire and the neutral wire N. In addition, a voltage amplitude of the voltage signal is within the first target range.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 4, the positive busbar BUS+ is used as an example for description, and this does not constitute a limitation on embodiments of this application. In addition, for a specific implementation principle in which the power conversion device shown in FIG. 4 detects whether the neutral wire N is abnormally connected by using the controller, the power conversion circuit, the resistor unit R11, and the like, refer to the specific implementation in FIG. 3. Details are not described in this embodiment of this application.

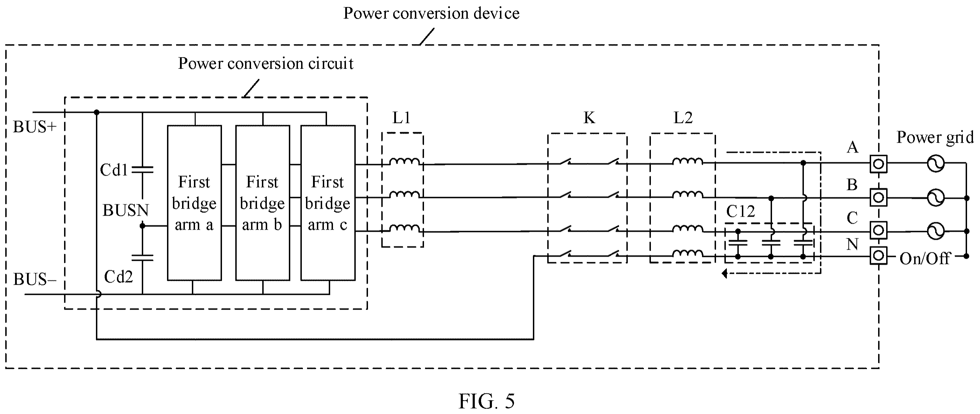

In some feasible implementations, a specific structure of the power conversion device may also be as shown in FIG. 5. FIG. 5 is a diagram of another framework of the power conversion device according to an embodiment of this application. In the power conversion device shown in FIG. 5, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, and the first inductor group L2 in the power conversion circuit, refer to the foregoing content and FIG. 5. Details are not described herein in this embodiment of this application. In addition, a first capacitor group C12 includes three first capacitors. A first end of each first capacitor is connected to one corresponding live wire, and a second end is connected to the neutral wire N in the power conversion circuit. It can be learned that a difference between the power conversion device shown in FIG. 3 and the power conversion device shown in FIG. 5 lies in that locations of the first capacitor groups respectively disposed in the power conversion devices are different.

It should be noted that the first capacitor group C12 is disposed between the live wire and the neutral wire N, and may filter out a differential mode signal in the alternating current electrical signal transmitted on each live wire, which improves quality of a power supply.

It may be understood that to detect whether the neutral wire N shown in FIG. 5 is abnormally connected, the power conversion device may inject the harmonic signal of the first target frequency into one of the first bridge arms by using the controller. In addition, when detecting that a voltage amplitude of a voltage signal that is of the first target frequency and that is generated between the live wire and the neutral wire N is within the first target range, the power conversion device may output information about an abnormal connection of the neutral wire N. For example, as shown in FIG. 5, the controller may control the second switch unit on the neutral wire N and the first switch unit on the live wire A to be turned on, and inject the harmonic signal of the first target frequency into the first bridge arm a by using the neutral point BUSN as the reference ground, to control the first bridge arm a to act and output the alternating current electrical signal to the live wire A. In addition, the alternating current electrical signal carries the voltage signal of the first target frequency. Further, it can be learned from the foregoing content that when the alternating current electrical signal injected by the first bridge arm a to the live wire A carries the voltage signal of the first target frequency, if the neutral wire N is floating, that is, the neutral wire N is not connected to the power grid, the live wire A and the neutral wire N cannot form a current loop. In this case, as shown in FIG. 5, the alternating current electrical signal output by the first bridge arm a flows to the neutral point BUSN through a first capacitor that is in the first capacitor group C12 and that corresponds to the live wire A. In this way, the first capacitor is charged. Then, a voltage signal of the first target frequency is generated between the live wire A and the neutral wire N, and a voltage amplitude of the voltage signal of the first target frequency is within the first target range.

Alternatively, it can be learned from the foregoing content that the controller may separately control the first switch unit on the live wire B or the live wire C to be turned on, and inject the harmonic signal of the first target frequency into the first bridge arm b or the first bridge arm c, to detect whether the neutral wire N is abnormally connected. Alternatively, the controller may also simultaneously and symmetrically inject the harmonic signal of the first target frequency into the three first bridge arms shown in FIG. 5. In addition, when detecting that a voltage amplitude of a voltage signal that is of the first target frequency and that is generated between any live wire and the neutral wire N is within the first target range, the controller may output the information about the abnormal connection of the neutral wire N. It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 5, the positive busbar BUS+ is used as an example for description, and this does not constitute a limitation on embodiments of this application. In addition, for a specific implementation principle in which the power conversion device shown in FIG. 5 detects whether the neutral wire N is abnormally connected by using the controller, the power conversion circuit, the first capacitor group C12, and the like, refer to the specific implementation in FIG. 3. Details are not described in this embodiment of this application.

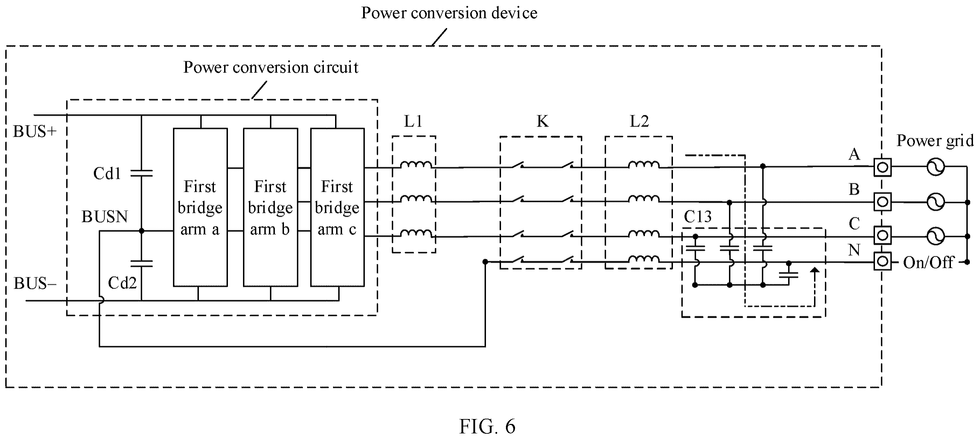

In some feasible implementations, a specific structure of the power conversion device may also be as shown in FIG. 6. FIG. 6 is a diagram of still another framework of the power conversion device according to an embodiment of this application. In the power conversion device shown in FIG. 6, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, and the first inductor group L2 in the power conversion circuit, refer to the foregoing content and FIG. 6. Details are not described herein in this embodiment of this application. In addition, a first capacitor group C13 includes three first capacitors and a second capacitor. A first end of each first capacitor is connected to one corresponding live wire, and a second end is connected to the neutral wire N in the power conversion circuit through the second capacitor. It can be learned that a difference between the power conversion device shown in FIG. 6 and the power conversion device shown in FIG. 5 lies in that each first capacitor in the first capacitor group C13 shown in FIG. 6 may be connected to the neutral wire N through the second capacitor. It should be noted that the first capacitor group C13 is disposed between the live wire and the neutral wire N, and may perform filtering on the differential mode signal in the alternating current electrical signal transmitted on each live wire, which improves quality of the power supply.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 6, the neutral point BUSN is used as an example for description, and this does not constitute a limitation on embodiments of this application. In addition, for a specific implementation principle in which the power conversion device shown in FIG. 6 detects whether the neutral wire N is abnormally connected by using the controller, the power conversion circuit, the first capacitor group C13, and the like, refer to the specific implementation in FIG. 3. Details are not described in this embodiment of this application.

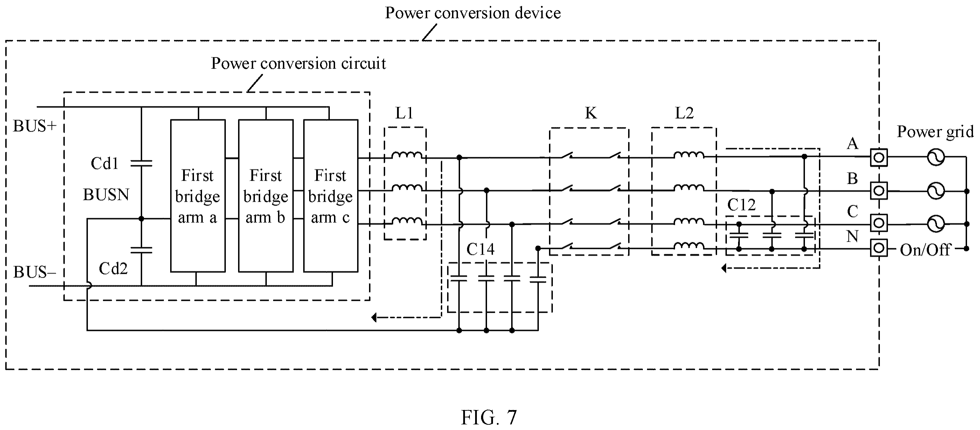

In some feasible implementations, a specific structure of the power conversion device may also be as shown in FIG. 7. FIG. 7 is a diagram of still another framework of the power conversion device according to an embodiment of this application. In the power conversion device shown in FIG. 7, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, the first inductor group L2, and the first capacitor group C12 in the power conversion circuit, refer to the foregoing content and FIG. 7. Details are not described herein in this embodiment of this application. In addition, a first capacitor group C14 shown in FIG. 7 includes three first capacitors and one voltage divider component. A first end of each first capacitor is connected to one corresponding live wire, and a second end is connected to the direct current end of the power conversion circuit, and is connected to the neutral wire N in the power conversion circuit through the voltage divider component. It can be learned that a difference between the first capacitor group C14 shown in FIG. 7 and the first capacitor group C11 shown in FIG. 3 lies in that the voltage divider component is additionally disposed in the first capacitor group C14 shown in FIG. 7. Specifically, the voltage divider component may be a resistor or a capacitor. For example, in the first capacitor group C14 shown in FIG. 7, an example in which the voltage divider component is a capacitor is used, and this does not constitute a limitation on this embodiment of this application. When the voltage divider component is a capacitor, the capacitor may achieve isolation and filtering effect on the neutral wire N in the power conversion device and the direct current end of the power conversion circuit. It should be noted that the first capacitor group C14 shown in FIG. 7 may also be replaced with the first capacitor group C11 shown in FIG. 3, and the first capacitor group C12 shown in FIG. 7 may also be replaced with the first capacitor group C13 shown in FIG. 6. Similarly, the first capacitor group C11 shown in FIG. 3 may also be replaced with the first capacitor group C14, or may be replaced with the resistor unit R11 shown in FIG. 4. Examples are not described herein one by one in this embodiment of this application.

It may be understood that to detect whether the neutral wire N shown in FIG. 7 is abnormally connected, the power conversion device may inject the harmonic signal of the first target frequency into any one of the first bridge arms by using the controller, or simultaneously and symmetrically inject the harmonic signal of the first target frequency into the first bridge arms. In addition, when detecting that a voltage amplitude of a voltage signal that is of the first target frequency and that is generated between the live wire and the neutral wire N is within the first target range, the power conversion device may output information about an abnormal connection of the neutral wire N. For example, as shown in FIG. 7, the controller injects the harmonic signal of the first target frequency into the first bridge arm a by using the neutral point BUSN as the reference ground, to control the first bridge arm a to act and output the alternating current electrical signal to the live wire A. In addition, the alternating current electrical signal carries the voltage signal of the first target frequency. Further, it can be learned from the foregoing content that when the alternating current electrical signal injected by the first bridge arm a to the live wire A carries the voltage signal of the first target frequency, if the neutral wire N is floating, that is, the neutral wire N is not connected to the power grid, the live wire A and the neutral wire N cannot form a current loop. In this case, as shown in FIG. 7, the alternating current electrical signal output by the first bridge arm a flows to the neutral point BUSN through a first capacitor that is in the first capacitor group C12 and that corresponds to the live wire A, and flows to the neutral point BUSN through a first capacitor that is in the first capacitor group C14 and that corresponds to the live wire A. In this way, the first capacitors that are in the first capacitor group C12 and the first capacitor group C14 and that correspond to the live wire A are both charged. Then, a voltage signal of the first target frequency is generated between the live wire A and the neutral wire N, and a voltage amplitude of the voltage signal of the first target frequency is within the first target range.

It should be noted that, it can be learned from the foregoing content that the first target range may specifically include being greater than the first voltage threshold, or include the target range greater than the second voltage threshold and less than the third voltage threshold, and the first voltage threshold, the second voltage threshold, and the third voltage threshold may be obtained based on a voltage amplitude of the harmonic signal injected by the controller to each first bridge arm and the capacitance value of the first capacitor. Further, in the power conversion device shown in FIG. 7, the first target range (that is, the first voltage threshold, and the second voltage threshold and the third voltage threshold) may be obtained based on the voltage amplitude of the harmonic signal injected by the controller to each first bridge arm, and capacitance values of the first capacitor in the first capacitor group C14 and the first capacitor in the first capacitor group C12.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 7, the neutral point BUSN is used as an example for description, and this does not constitute a limitation on embodiments of this application. In addition, for a specific implementation principle in which the power conversion device shown in FIG. 7 detects whether the neutral wire is abnormally connected by using the controller, the power conversion circuit, the first capacitor group C14, the first capacitor group C12, and the like, refer to the specific implementation in FIG. 3. Details are not described in this embodiment of this application.

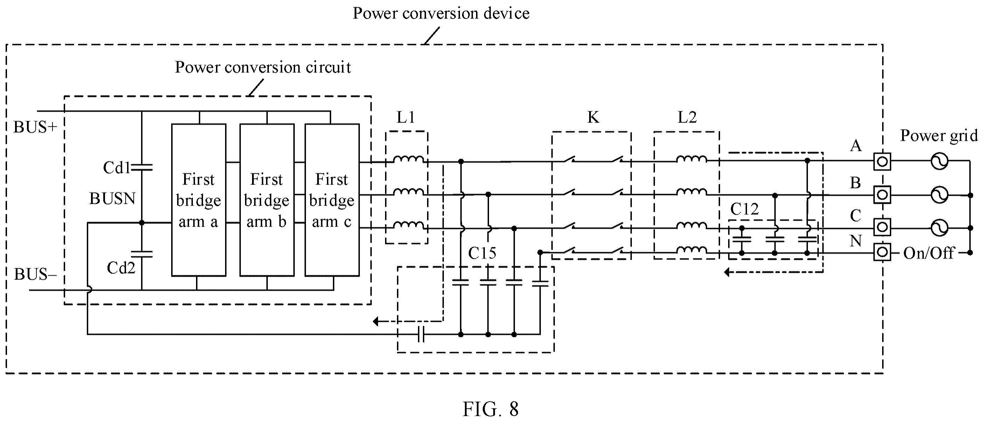

In some feasible implementations, a specific structure of the power conversion device may also be as shown in FIG. 8. FIG. 8 is a diagram of still another framework of the power conversion device according to an embodiment of this application. In the power conversion device shown in FIG. 8, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the first capacitor group C12, the switch unit K, and the first inductor group L2 in the power conversion circuit, refer to the foregoing content and FIG. 8. Details are not described herein in this embodiment of this application. In addition, a first capacitor group C15 shown in FIG. 8 includes three first capacitors and two voltage divider components. A first end of each first capacitor is connected to one corresponding live wire, and a second end is connected to the neutral wire N in the power conversion circuit through one voltage divider component, and is connected to the direct current end of the power conversion circuit through the other voltage divider component. Specifically, the voltage divider component may be a resistor or a capacitor. For example, in the first capacitor group C15 shown in FIG. 8, an example in which the voltage divider component is a capacitor is used, and this does not constitute a limitation on this embodiment of this application. When the voltage divider component is a capacitor, a difference between the power conversion device shown in FIG. 8 and the power conversion device shown in FIG. 7 lies in that two capacitors are disposed in the first capacitor group C15 shown in FIG. 8. The first capacitor group C12 shown in FIG. 8 may also be replaced with the first capacitor group C13 shown in FIG. 6. Examples are not described herein one by one in this embodiment of this application.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 8, the neutral point BUSN is used as an example for description, and this does not constitute a limitation on embodiments of this application. In addition, for a specific implementation principle in which the power conversion device shown in FIG. 8 detects whether the neutral wire N is abnormally connected by using the controller, the power conversion circuit, the first capacitor group C12, the first capacitor group C15, and the like, refer to the specific implementation in FIG. 3. Details are not described in this embodiment of this application.

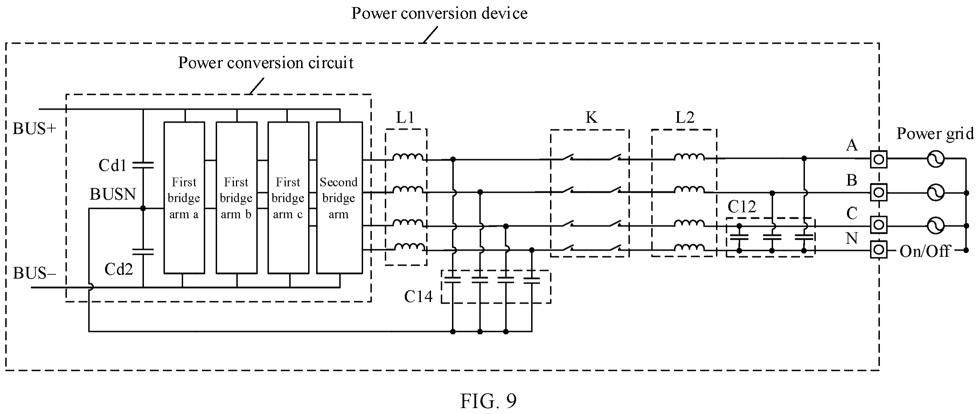

In some feasible implementations, a specific structure of the power conversion device may also be as shown in FIG. 9. FIG. 9 is a diagram of still another framework of the power conversion device according to an embodiment of this application. In the power conversion device shown in FIG. 9, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the first capacitor group C14, the first capacitor group C12, the switch unit K, and the first inductor group L2 in the power conversion circuit, refer to the foregoing content and FIG. 9. Details are not described herein in this embodiment of this application. In addition, the power conversion circuit shown in FIG. 9 further includes a second bridge arm, that is, the power conversion circuit shown in FIG. 9 includes four bridge arms. An alternating current output of the second bridge arm is connected to the neutral wire N, and the first inductor may be connected in series to the neutral wire N. It should be noted that the first capacitor group C12 shown in FIG. 9 may also be replaced with the first capacitor group C13 shown in FIG. 6. The first capacitor group C14 shown in FIG. 9 may also be replaced with the first capacitor group C11 shown in FIG. 3, or may be replaced with the first capacitor group C15 shown in FIG. 8, or may be replaced with the resistor unit R11 shown in FIG. 4. Examples are not described herein one by one in this embodiment of this application.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 9, the neutral point BUSN is used as an example for description, and this does not constitute a limitation on embodiments of this application. In addition, for a specific implementation principle in which the power conversion device shown in FIG. 9 detects whether the neutral wire is abnormally connected by using the controller, the power conversion circuit, the first capacitor group C11, the first capacitor group C12, and the like, refer to the specific implementation in FIG. 3. Details are not described in this embodiment of this application.

In some feasible implementations, when the power conversion device is connected to a power grid by using a three-phase four-wire system, the power conversion device is connected to the power grid through three live wires and one ground cable. In this case, the power conversion device includes three first conducting wires, namely, the three live wires, and one second conducting wire, namely, the ground cable. The power conversion device may detect whether the ground cable is abnormally connected, to ensure power supply stability and security.

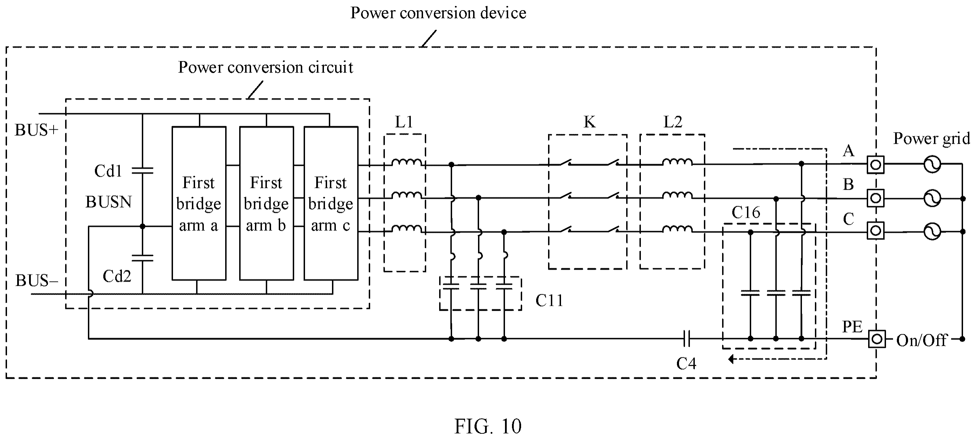

Specifically, refer to FIG. 10. FIG. 10 is a diagram of still another framework of the power conversion device according to an embodiment of this application. In the power conversion device shown in FIG. 10, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, the first inductor group L2, and the first capacitor group C11 in the power conversion circuit, refer to the foregoing content and FIG. 10. Details are not described herein in this embodiment of this application. In addition, a first capacitor group C16 shown in FIG. 10 includes three first capacitors. A first end of each first capacitor is connected to one corresponding live wire, and a second end is connected to the ground cable in the power conversion circuit. The ground cable may also be connected to the direct current end of the power conversion circuit through a voltage divider component, and the voltage divider component may be specifically a capacitor or a resistor. For example, in FIG. 10, an example in which the voltage divider component is a fourth capacitor C4 is used for description. The fourth capacitor C4 may achieve isolation and filtering effect on the ground cable PE and the direct current end of the power conversion circuit.

It may be understood that to detect whether the ground cable PE shown in FIG. 10 is abnormally connected, the power conversion device may inject the harmonic signal of the first target frequency into any one of the first bridge arms by using the controller, or simultaneously and symmetrically inject the harmonic signal of the first target frequency into the first bridge arms. In addition, when detecting that a voltage amplitude of a voltage signal that is of the first target frequency and that is generated between the live wire and the ground cable PE is within the first target range, the power conversion device may output information about an abnormal connection of the ground cable PE. For example, as shown in FIG. 10, the controller injects the harmonic signal of the first target frequency into the first bridge arm a by using the neutral point BUSN as the reference ground, to control the first bridge arm a to act and output the alternating current electrical signal to the live wire A. In addition, the alternating current electrical signal carries the voltage signal of the first target frequency. Further, it can be learned from the foregoing content that when the alternating current electrical signal injected by the first bridge arm a to the live wire A carries the voltage signal of the first target frequency, if the ground cable PE is floating, that is, the ground cable PE is not connected to the power grid, the live wire A and the ground cable PE cannot form a current loop. In this case, as shown in FIG. 10, the alternating current electrical signal output by the first bridge arm a flows to the neutral point BUSN through a first capacitor that is in the first capacitor group C16 and that corresponds to the live wire A. In this way, the first capacitor is charged. Then, a voltage signal of the first target frequency is generated between the live wire A and the ground cable PE, and a voltage amplitude of the voltage signal of the first target frequency is within the first target range.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 10, the neutral point BUSN is used as an example for description, and this does not constitute a limitation on embodiments of this application. In addition, the first capacitor group C11 shown in FIG. 10 may be replaced with the first capacitor group C14 shown in FIG. 7, or may be replaced with the first capacitor group C15 shown in FIG. 8, or may be replaced with the resistor unit R11 shown in FIG. 4. Examples are not described herein one by one in this embodiment of this application. For a specific implementation principle in which the power conversion device shown in FIG. 10 detects whether the ground cable PE is abnormally connected by using the controller, the power conversion circuit, the first capacitor group C11, the first capacitor group C16, and the like, refer to the specific implementation in FIG. 3. Details are not described in this embodiment of this application.

In some feasible implementations, when the power conversion device is connected to a power grid by using a three-phase five-wire system, the power conversion device is connected to the power grid through three live wires, one ground cable, and one neutral wire. In this case, the power conversion device includes three first conducting wires, namely, the three live wires, and two second conducting wires, namely, the ground cable and the neutral wire. The power conversion device may detect whether the ground cable and the neutral wire are abnormally connected, to ensure power supply stability and security.

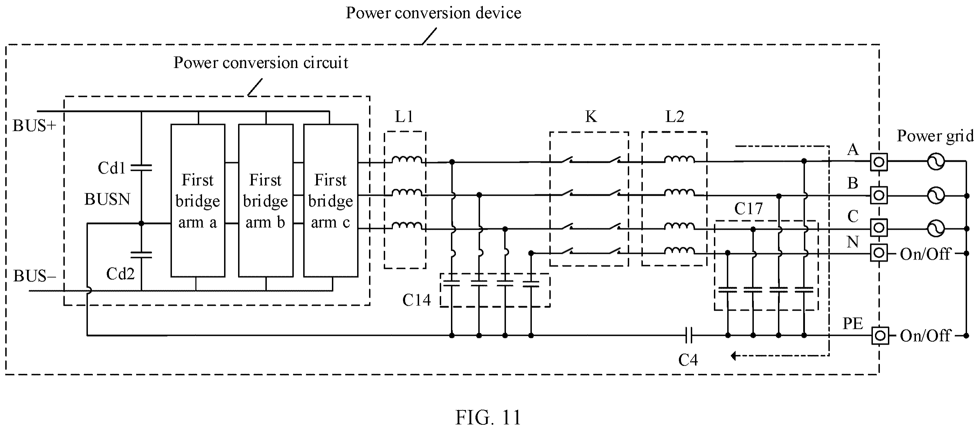

Specifically, refer to FIG. 11. FIG. 11 is a diagram of still another framework of the power conversion device according to an embodiment of this application. In the power conversion device shown in FIG. 11, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, the first inductor group L2, and the first capacitor group C14 in the power conversion circuit, refer to the foregoing content and FIG. 11. Details are not described herein in this embodiment of this application. In addition, the first inductor and the second switch unit are connected in series to the neutral wire N shown in FIG. 11, and the neutral wire N may be connected to the direct current end of the power conversion circuit through a voltage divider component. The voltage divider component may be specifically a capacitor or a resistor. For example, in FIG. 11, an example in which the voltage divider component is a fourth capacitor C4 is used for description. The power conversion device shown in FIG. 11 further includes a first capacitor group C17. In the first capacitor group C17, a third capacitor is disposed between the neutral wire N and the ground cable PE, and three first capacitors are disposed between a corresponding live wire and the ground cable PE. It should be noted that the first capacitor group C14 shown in FIG. 11 may also be replaced with the first capacitor group C11 shown in FIG. 10, or the first capacitor group C15 shown in FIG. 8, or the resistor unit R11 shown in FIG. 4, and the first capacitor group C17 may also be replaced with the first capacitor group C16. Examples are not described herein one by one in this embodiment of this application.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 11, the neutral point BUSN is used as an example for description, and this does not constitute a limitation on embodiments of this application. In addition, for a specific implementation principle in which the power conversion device shown in FIG. 11 detects whether the ground cable PE and the neutral wire N are abnormally connected by using the controller, the power conversion circuit, the first capacitor group C14, the first capacitor group C17, and the like, refer to the specific implementation in FIG. 3. Details are not described in this embodiment of this application.

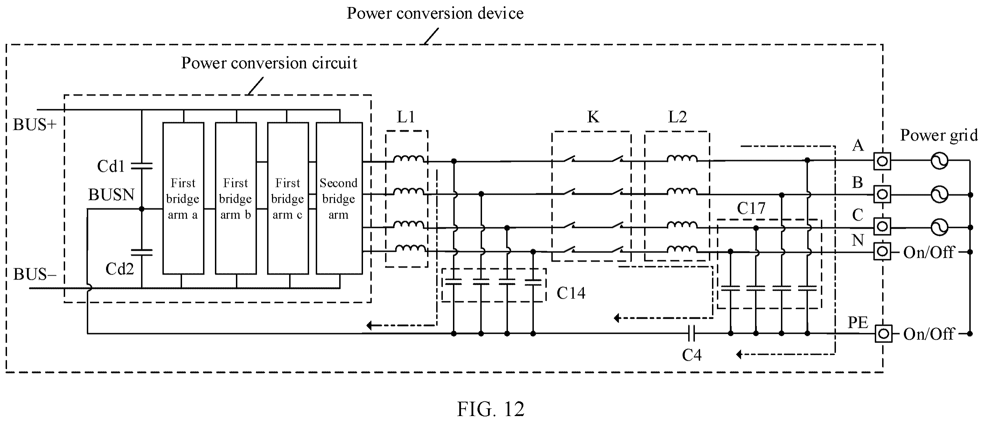

In some feasible implementations, a specific structure of the power conversion device may also be as shown in FIG. 12. FIG. 12 is a diagram of still another framework of the power conversion device according to an embodiment of this application. In the power conversion device shown in FIG. 12, for settings of the first bridge arm a, the first bridge arm b, the first bridge arm c, the positive busbar BUS+, the negative busbar BUS-, the neutral point BUSN that is connected to the direct current side capacitor Cd1 and the direct current side capacitor Cd2, the first inductor group L1, the switch unit K, the first inductor group L2, the first capacitor group C14, and the first capacitor group C17 in the power conversion circuit, refer to the foregoing content and FIG. 12. Details are not described herein in this embodiment of this application. In addition, the power conversion circuit shown in FIG. 12 further includes a second bridge arm, that is, the power conversion circuit shown in FIG. 12 includes four bridge arms. It should be noted that the first capacitor group C14 shown in FIG. 12 may also be replaced with the first capacitor group C11 shown in FIG. 10, or the first capacitor group C15 shown in FIG. 8, or the resistor unit R11 shown in FIG. 4, and the first capacitor group C17 may also be replaced with the first capacitor group C16. Examples are not described herein one by one in this embodiment of this application.

It may be understood that when detecting whether the neutral wire N is abnormally connected by using the controller, the power conversion circuit, and the first capacitor group C14, the power conversion device shown in FIG. 12 also detects whether the ground cable PE is abnormally connected by using the controller, the power conversion circuit, and the first capacitor group C17. In other words, the power conversion device shown in FIG. 12 can detect both the ground cable PE and the neutral wire N. Specifically, the power conversion device may inject the harmonic signal of the first target frequency into any one of the first bridge arms by using the controller, or simultaneously and symmetrically inject the harmonic signal of the first target frequency into the first bridge arms. In addition, when detecting that a voltage amplitude of a voltage signal that is of the first target frequency and that is generated between the live wire and the neutral wire N is within the first target range, the power conversion device may output information about an abnormal connection of the neutral wire N, and when detecting that a voltage amplitude of a voltage signal that is of the first target frequency and that is generated between the live wire and the ground cable PE is within the first target range, the power conversion device may output information about an abnormal connection of the ground cable PE. For example, refer to FIG. 12 again. The controller injects the harmonic signal of the first target frequency into the first bridge arm a by using the neutral point BUSN as the reference ground, to control the first bridge arm a to act and output the alternating current electrical signal to the live wire A. In addition, the alternating current electrical signal carries the voltage signal of the first target frequency. Further, it can be learned from the foregoing content that when the alternating current electrical signal injected by the first bridge arm a to the live wire A carries the voltage signal of the first target frequency, if the neutral wire N is floating, that is, the neutral wire N is not connected to the power grid, the live wire A and the neutral wire N cannot form a current loop. In this case, as shown in FIG. 7, the alternating current electrical signal output by the first bridge arm a flows to the neutral point BUSN through the first capacitor that is in the first capacitor group C14 and that corresponds to the live wire A. In addition, if the ground cable PE is floating, that is, the ground cable PE is not connected to the power grid, the live wire A and the ground cable PE cannot form a current loop. In this case, the alternating current electrical signal output by the first bridge arm a flows to the neutral point BUSN through the first capacitor that is in the first capacitor group C17 and that corresponds to the live wire A. In this way, the first capacitors that are in the first capacitor group C14 and the first capacitor group C17 and that correspond to the live wire A are both charged. Then, a voltage signal of the first target frequency is generated between the live wire A and the neutral wire N, and a voltage amplitude of the voltage signal of the first target frequency is within the first target range. In addition, a voltage signal of the first target frequency is generated between the live wire A and the ground cable PE, and a voltage amplitude of the voltage signal of the first target frequency is within the first target range.

It can be learned that when injecting the harmonic signal of the first target frequency into any one first bridge arm or all first bridge arms, the controller may detect the voltage amplitude of the voltage signal that is of the first target frequency and that is generated between the live wire A and the neutral wire N, to determine whether the neutral wire N is abnormally connected, and may also detect the voltage amplitude of the voltage signal that is of the first target frequency and that is generated between the live wire A and the ground cable PE, to determine whether the ground cable PE is abnormally connected. This improves detection efficiency. It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 12, the neutral point BUSN is used as an example for description, and this does not constitute a limitation on embodiments of this application. In addition, for a specific implementation principle in which the power conversion device shown in FIG. 12 detects whether the neutral wire N is abnormally connected by using the controller, the power conversion circuit, and the first capacitor group C14, and detects whether the ground cable PE is abnormally connected by using the controller, the power conversion circuit, and the first capacitor group C17, refer to the specific implementation in FIG. 3. Details are not described in this embodiment of this application.

In some feasible implementations, in the power conversion device shown in FIG. 12, in addition to injecting the harmonic signal of the first target frequency into the first bridge arm to detect whether the ground cable PE is abnormally connected, the controller may inject a harmonic signal of a second target frequency into the second bridge arm. In addition, when a voltage amplitude of the voltage signal that is of the second target frequency and that is generated between the neutral wire N and the ground cable PE is within a second target range, the controller may output the information about the abnormal connection of the ground cable PE. Specifically, when the controller injects the harmonic signal of the second target frequency into the second bridge arm, an alternating current electrical signal injected by the second bridge arm into the neutral wire N carries a voltage signal of the second target frequency. If the ground cable PE is floating, that is, the ground cable PE is not connected to the power grid, the ground cable PE and the neutral wire N cannot form a current loop. The alternating current electrical signal on the neutral wire N flows to the neutral point BUSN through the third capacitor in the first capacitor group C17. In this way, the third capacitor is charged. Then, a voltage signal of the second target frequency is generated between the ground cable PE and the neutral wire N, and a voltage amplitude of the voltage signal of the second target frequency is within the second target range. On the contrary, if the ground cable PE is normally connected to the power grid, the alternating current electrical signal output by the second bridge arm may be injected into the power grid through the neutral wire N. In this case, the ground cable PE and the neutral wire N are clamped by a voltage of the power grid, and the third capacitor in the first capacitor group C11 is not charged. In this case, the voltage signal of the second target frequency is not generated between the ground cable PE and the neutral wire N, or the voltage amplitude of the voltage signal that is of the second target frequency and that is generated between the ground cable PE and the neutral wire N is not within the second target range. It can be learned that after injecting the harmonic signal of the second target frequency into the second bridge arm, the controller may detect whether the voltage amplitude of the voltage signal that is of the second target frequency and that is generated between the ground cable PE and the neutral wire N is within the second target range, to further determine whether the neutral wire is abnormally connected.

It may be understood that the controller may determine the second target range based on the voltage amplitude of the harmonic signal injected into the second bridge arm and a capacitance value of the third capacitor. In addition, the second target frequency of the harmonic signal injected by the controller into the second bridge arm may be negatively correlated with the capacitance value of the third capacitor. For a specific implementation method, refer to the specific implementation in FIG. 3. Details are not described herein in this embodiment of this application. In addition, the first target frequency and the second target frequency may be the same or may be different, and the first target range and the second target range may be the same or may be different. This is not limited in embodiments of this application.

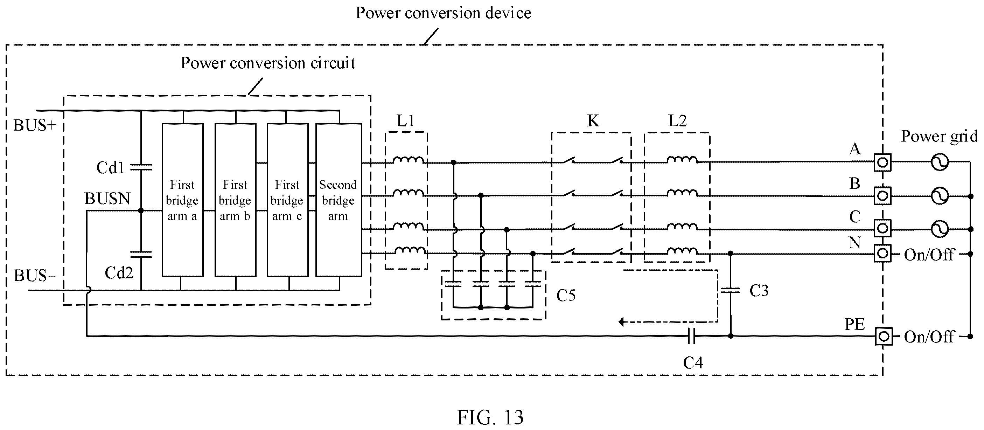

In some feasible implementations, a specific structure of the power conversion device may also be as shown in FIG. 13. FIG. 13 is a diagram of still another framework of the power conversion device according to an embodiment of this application. In the power conversion device shown in FIG. 13, for settings of the first bridge arm a, the first bridge arm b, the first bridge arm c, the second bridge arm, the positive busbar BUS+, the negative busbar BUS-, the neutral point BUSN that is connected to the direct current side capacitor Cd1 and the direct current side capacitor Cd2, the first inductor group L1, the switch unit K, the first inductor group L2, a capacitor group C5, and the like in the power conversion circuit, refer to the foregoing content and FIG. 13. Details are not described herein in this embodiment of this application. In addition, the power conversion circuit shown in FIG. 13 further includes a third capacitor C3, and the third capacitor C3 is disposed between the neutral wire N and the ground cable PE.

It may be understood that the direct current end of the power conversion circuit may be the positive busbar BUS+, the negative busbar BUS-, or the neutral point BUSN that is connected to the direct current side capacitor Cd1 and the direct current side capacitor Cd2. In FIG. 13, the neutral point BUSN is used as an example for description, and this does not constitute a limitation on embodiments of this application. In addition, in the power conversion device shown in FIG. 13, the controller may inject a harmonic signal of a second target frequency into the second bridge arm, and when a voltage amplitude of the voltage signal that is of the second target frequency and that is generated between the neutral wire N and the ground cable PE is within the second target range, output information about an abnormal connection of the ground cable PE. For a specific implementation method, refer to the specific implementation in FIG. 3. Details are not described herein in this embodiment of this application.

In some feasible implementations, in the power conversion devices shown in FIG. 10 to FIG. 13, the first capacitor group C12 shown in FIG. 6 may alternatively be disposed, or the first capacitor group C13 shown in FIG. 7 may be disposed. Examples are not described herein one by one in this embodiment of this application.

In general, the power conversion device provided in embodiments of this application injects, by using the controller, the harmonic signal of the first target frequency into the at least one first bridge arm disposed in the power conversion circuit, so that the alternating current output of the first bridge arm can transmit, to the corresponding first conducting wire, the voltage signal carrying the first target frequency. Further, one corresponding first capacitor is disposed between each first conducting wire and the direct current end of the power conversion device in the power conversion device. When the second conducting wire is abnormally connected, the voltage signal that is of the first target frequency and that is transmitted on the first conducting wire may flow to the direct current end of the power conversion device through the first capacitor. In addition, the direct current end of the power conversion device is connected to the second conducting wire. In this case, when the voltage signal of the first target frequency passes through the first capacitor, a voltage signal of the first target frequency is generated between the first conducting wire and the second conducting wire, and a voltage amplitude of the voltage signal is within the first target range. Therefore, the power conversion device may detect, by using the controller, the voltage amplitude of the voltage signal that is of the first target frequency and that is generated between the first conducting wire and the second conducting wire in this case. When the voltage amplitude is within the first target range, it indicates that a connection of the second conducting wire is abnormal, and the controller outputs information about an abnormal connection of the second conducting wire. On the contrary, when the voltage amplitude of the voltage signal that is of the first target frequency and that is generated between the first conducting wire and the second conducting wire is beyond the first target range, it indicates that the connection of the second conducting wire is normal, and the controller may output information indicating that the second conducting wire is normally connected, or does not output information, which indicates that no abnormal connection exists. Specifically, when the power conversion device includes the neutral wire, the second conducting wire may be a to-be-detected neutral wire. When the power conversion device includes the ground cable, the second conducting wire may be a to-be-detected ground cable. When the power conversion device includes the neutral wire and the ground cable, the second conducting wire may be the to-be-detected neutral wire and the to-be-detected ground cable. It can be learned that the power conversion device provided in embodiments of this application may detect whether the neutral wire or the ground cable is abnormally connected, or may detect whether both the neutral wire and the ground cable are abnormally connected, to ensure power supply stability and security. The power conversion device is also applicable to various power grid standards and power supply scenarios, has a simple structure, and is easy to implement.

## Claims

1. A power conversion device, comprising a power conversion circuit, a controller, at least one first capacitor, at least one first conducting wire, and at least one second conducting wire, wherein a first inductor is connected in series to any one first conducting wire, the power conversion circuit comprises at least one first bridge arm, an alternating current output of each first bridge arm is connected to one corresponding first conducting wire, a first end of a first capacitor corresponding to each first bridge arm is connected to a side that is of the first inductor on the first conducting wire and that is away from the first bridge arm, and a second end of the first capacitor corresponding to each first bridge arm is connected to a direct current end of the power conversion circuit and one corresponding second conducting wire;
the first conducting wire is a live wire, and the at least one second conducting wire comprises at least one of a neutral wire and a ground cable; and
the controller is configured to: after injecting a harmonic signal of a first target frequency into the at least one first bridge arm in the power conversion circuit, when a voltage amplitude of a voltage signal that is of the first target frequency and that is generated between the first conducting wire and the second conducting wire is within a first target range, output information about an abnormal connection of the second conducting wire.

2. The power conversion device according to claim 1, wherein the first target range comprises a target range greater than a first voltage threshold, the first voltage threshold is positively correlated with a voltage amplitude of the harmonic signal of the first target frequency, the first voltage threshold is negatively correlated with a capacitance value of the first capacitor, and the controller is further configured to:
when the voltage amplitude of the voltage signal that is of the first target frequency and that is generated between the first conducting wire and the second conducting wire is greater than the first voltage threshold, output the information about the abnormal connection of the second conducting wire.

3. The power conversion device according to claim 1, wherein the first target range comprises a target range greater than a second voltage threshold and less than a third voltage threshold, the second voltage threshold and the third voltage threshold are positively correlated with a voltage amplitude of the harmonic signal of the first target frequency, the second voltage threshold and the third voltage threshold are negatively correlated with a capacitance value of the first capacitor, and the controller is further configured to:
when the voltage amplitude of the voltage signal that is of the first target frequency and that is generated between the first conducting wire and the second conducting wire is greater than the second voltage threshold and is less than the third voltage threshold, output the information about the abnormal connection of the second conducting wire.

4. The power conversion device according to any one of claims 1 to 3, wherein the voltage amplitude of the harmonic signal of the first target frequency is negatively correlated with the capacitance value of the first capacitor.

5. The power conversion device according to any one of claims 1 to 4, wherein the alternating current output of each first bridge arm in the power conversion circuit is configured to connect to an alternating current load through the corresponding first conducting wire, and the controller is configured to:
when the harmonic signal of the first target frequency is injected into the at least one first bridge arm in the power conversion circuit, transmit a fundamental wave signal to the alternating current load through the first conducting wire that corresponds to the at least one first bridge arm.

6. The power conversion device according to any one of claims 1 to 5, comprising two second conducting wires, wherein one second conducting wire is the neutral wire, and the other second conducting wire is the ground cable.

7. The power conversion device according to any one of claims 1 to 5, comprising one second conducting wire, wherein the second conducting wire is the neutral wire, the power conversion device further comprises the ground cable and a third capacitor, a second inductor is connected in series to the neutral wire, an alternating current output of a second bridge arm in the power conversion circuit is connected to the neutral wire, a first end of the third capacitor is connected to a side that is of the second inductor on the neutral wire and that is away from the second bridge arm, and a second end of the third capacitor is connected to the ground cable and the direct current end of the power conversion circuit, and the controller is further configured to:
inject a harmonic signal of a second target frequency into the second bridge arm in the power conversion circuit, and when a voltage amplitude of a voltage signal that is of the second target frequency and that is generated between the neutral wire and the ground cable is within a second target range, output information about an abnormal connection of the ground cable.

8. The power conversion device according to any one of claims 1 to 7, wherein the power conversion device further comprises a positive busbar capacitor and a negative busbar capacitor that are connected in series to a neutral point, the positive busbar capacitor is connected to a positive direct current busbar, the negative busbar capacitor is connected to a negative direct current busbar, the power conversion circuit is connected in parallel between the positive direct current busbar and the negative direct current busbar and is connected to the neutral point, and the direct current end of the power conversion circuit is any one of the neutral point, the positive direct current busbar, or the negative direct current busbar.

9. The power conversion device according to any one of claims 1 to 8, wherein the power conversion device further comprises at least one first switch unit, and each first switch unit is disposed between a corresponding first inductor and the alternating current load; and
that the controller is configured to inject the harmonic signal of the first target frequency into the at least one first bridge arm in the power conversion circuit comprises:
the controller is configured to: after controlling the at least one first switch unit to be turned on, inject the harmonic signal of the first target frequency into at least one first bridge arm that is in the power conversion circuit and that corresponds to the at least one first switch unit.

10. The power conversion device according to claim 9, wherein the power conversion device further comprises a second switch unit, the second switch unit is disposed between the direct current end of the power conversion circuit and the second end of the first capacitor, and the second end of the first capacitor is further connected to the second conducting wire; and
that the controller is configured to inject the harmonic signal of the first target frequency into the at least one first bridge arm in the power conversion circuit comprises:
the controller is configured to: after controlling the second switch unit and the at least one first switch unit to be turned on, inject the harmonic signal of the first target frequency into the at least one first bridge arm that is in the power conversion circuit and that corresponds to the at least one first switch unit.
